# EUROPÄISCHE PATENTANMELDUNG

(11) **EP 4 825 563 A1**
(43) Veröffentlichungstag der Anmeldung: **21.10.2026**
(21) Anmeldenummer: 25170574.5
(22) Anmeldetag: 15.04.2025
(51) Int. Cl.: B29C 64/135, B29C 64/393, B33Y 10/00, B33Y 30/00, B33Y 50/02, B29D 11/00, G02B 6/00

(54) **VERFAHREN UND VORRICHTUNG ZUR LITHOGRAPHIEBASIERTEN GENERATIVEN FERTIGUNG EINER STRUKTUR**

(71) Anmelder: UpNano GmbH, 1030 Wien (AT)
(72) Erfinder: GRUBER, Peter, 1140 Wien (AT); SCHEUCHER, Michael, 1030 Wien (AT)
(74) Vertreter: SONN Patentanwälte GmbH & Co KG

(57) **Zusammenfassung**

Bei einem Verfahren zur lithographiebasierten generativen Fertigung einer Struktur, insbesondere einer optischen Linse, an einem axialen Ende eines optischen Leiters, bei dem in einem Schreibschritt von einer Bestrahlungseinrichtung ausgesendete elektromagnetische Strahlung mittels einer der Bestrahlungseinrichtung nachgeordneten Fokussieroptik zu einem Schreibstrahl fokussiert wird, der nacheinander auf Fokuspunkte innerhalb eines, bevorzugt mittels Multiphotonenabsorption, verfestigbaren Materials gerichtet wird, wodurch jeweils ein am Fokuspunkt befindliches Volumenelement des Materials verfestigt wird, dadurch gekennzeichnet, dass in einem dem Schreibschritt vorgelagerten Messschritt elektromagnetische Strahlung, die vorzugsweise von der Bestrahlungseinrichtung ausgesendet wird, von der Fokussieroptik zu einem auf die Ebene des axialen Endes fokussierten Messstrahl fokussiert und auf eine finite Anzahl von über das axiale Ende verteilten Messpunkten gerichtet wird, wobei jeweils die Lichtleistung des hierbei an den jeweiligen Messpunkten durch den optischen Leiter geleiteten Lichts gemessen wird und ein Referenzpunkt am axialen Ende des optischen Leiters für die generative Fertigung der Struktur anhand der an den Messpunkten gemessenen Lichtleistungen bestimmt wird.

## Beschreibung

Die vorliegende Erfindung betrifft ein Verfahren zur lithographiebasierten generativen Fertigung einer Struktur, insbesondere einer optischen Linse, an einem axialen Ende eines optischen Leiters, bei dem in einem Schreibschritt von einer Bestrahlungseinrichtung ausgesendete elektromagnetische Strahlung mittels einer der Bestrahlungseinrichtung nachgeordneten Fokussieroptik zu einem Schreibstrahl fokussiert wird, der nacheinander auf Fokuspunkte innerhalb eines, bevorzugt mittels Multiphotonenabsorption, verfestigbaren Materials gerichtet wird, wodurch jeweils ein am Fokuspunkt befindliches Volumenelement des Materials verfestigt wird.

Die Erfindung betrifft weiters eine Vorrichtung zur lithographiebasierten generativen Fertigung einer Struktur, insbesondere einer optischen Linse, an einem axialen Ende eines optischen Leiters.

Optische Leiter werden, unter anderem, in der Kommunikationstechnologie, der Sensorik, insbesondere in der Sensorik der Biowissenschaften und in gewissen Fertigungstechnologien eingesetzt. Neben der Verwendung von speziellen Konnektoren zum optischen Verbinden von einzelnen optischen Leitern oder von Leiterbündeln oder zum Ein- oder Auskoppeln von Licht in die Leiter beziehungsweise in Leiterbündel, kann Licht auch in einzelne Leiter ohne ein entsprechendes Endstück ein- beziehungsweise ausgekoppelt werden. Hierbei ist es jedoch nicht immer einfach, den eintretenden Lichtstrahl in eine zum Einkoppeln geeignete Position zum axialen Ende des optischen Leiters und gleichzeitig in einen geeigneten Winkel zu bringen. Gleichzeitig ist die Lichtausbeute an einem gewünschten Punkt, auf den der Leiter gerichtet wird, im Falle des Auskoppelns von Licht aus dem axialen Ende ungenügend, wenn das austretende Licht nicht in irgendeiner Form gebündelt wird.

Es gibt daher Ansätze zum Aufbringen von als optische Linsen wirkenden Strukturen auf die axialen Enden von optischen Lichtwellenleitern und das Interesse der Fachwelt richtet sich hierzu verstärkt auf lithographiebasierte generative Fertigungsverfahren, mit denen auch sehr kleine Strukturen mit sehr hoher Präzision gefertigt werden können. Solche Verfahren werden gemeinhin auch als 3D-Druckverfahren bezeichnet. Bei diesen Verfahren und den entsprechenden Vorrichtungen, den 3D-Druckern, wird ein durch elektromagnetische Strahlung verfestigbares Material entsprechend einem in Schichten als dreidimensionaler Körper berechneten Modell Schicht für Schicht durch entsprechendes Belichten ortsselektiv verfestigt und auf diese Weise die fertige Struktur generativ aufgebaut.

Bei einer optischen Linse, die an einem axialen Ende eines optischen Leiters mit einem solchen Verfahren aufgebaut werden soll, stellen sich vor allem die überaus kleinen Dimensionen eines solchen Leiters als Herausforderung dar. Mit typischen Dicken des Kerns eines optischen Leiters (Lichtwellenleiters) von etwa 5 µm bis etwa 30 µm ist es insbesondere schwierig, den 3D-Drucker auf eine Mitte des Kerns des Leiters oder auf das optische Zentrum des Kerns als jenem Referenzpunkt zu referenzieren, um in der Folge die optische Linse in Bezug auf diese Mitte oder dieses Zentrum symmetrisch generativ aufzubauen. Die Mitte des Kerns liegt nicht immer in der geometrischen Mitte des jeweiligen axialen Endes eines Lichtwellenleiters und das optische Zentrum nicht grundsätzlich in der Mitte des Kerns, da sowohl der Lichtwellenleiter als auch der Kern aufgrund von bei der Massenproduktion auftretenden Toleranzen deformiert sein kann oder eine gewollte Asymmetrie vorliegt. Das optische Zentrum kann daher effektiv nur durch das tatsächliche Einleiten eines Lichtstrahls und Messen der am anderen Ende resultierenden Lichtleistung beziehungsweise Lichtintensität bestimmt werden oder durch das Vermessen des austretenden Lichts bestimmt werden. Eine weitere Herausforderung liegt darin, eine gewünschte Winkelausrichtung, insbesondere eine fluchtende Ausrichtung, des optischen Leiters relativ zur optischen Achse der Fokussieroptik zu bewerkstelligen, um in der Folge die Struktur entsprechend dieser optischen Achse aufzubauen.

Die vorliegende Erfindung wird hierin mit besonderem Bezug auf eine optische Linse als am axialen Ende eines Lichtwellenleiters zu fertigende Struktur offenbart, es liegt jedoch gleichwohl im Rahmen der Erfindung, anstelle einer optischen Linse andere Strukturen und insbesondere, Beugungsgitter, Blenden und dergleichen als Struktur generativ zu fertigen.

Der vorliegenden Erfindung liegt daher die Aufgabe zugrunde, ein Verfahren der eingangs genannten Art dahingehend zu verbessern, dass das Referenzieren des 3D-Druckers auf das optische Zentrum des optischen Leiters und die Winkelausrichtung vereinfacht wird und dadurch rasch und zuverlässig vonstattengehen kann.

Zur Lösung dieser Aufgabe ist das erfindungsgemäße Verfahren dadurch gekennzeichnet, dass in einem dem Schreibschritt vorgelagerten Messschritt elektromagnetische Strahlung, die vorzugsweise von der Bestrahlungseinrichtung ausgesendet wird, von der Fokussieroptik zu einem auf die Ebene des axialen Endes fokussierten Messstrahl fokussiert und auf eine finite Anzahl von über das axiale Ende verteilten Messpunkten gerichtet wird, wobei jeweils die Lichtleistung des hierbei an den jeweiligen Messpunkten durch den optischen Leiter geleiteten Lichts gemessen wird und ein Referenzpunkt am axialen Ende des optischen Leiters für die generative Fertigung der Struktur anhand der an den Messpunkten gemessenen Lichtleistungen bestimmt wird.

Dadurch, dass der Schreibstrahl und der Messtrahl mittels derselben Fokussieroptik fokussiert werden, kann für die Ermittlung des Referenzpunkts am axialen Ende des optischen Leiters auf zusätzliche Apparaturen, die zueinander kalibriert werden müssten, verzichtet werden. Die Verwendung derselben Fokussieroptik für den Vorgang der generativen Fertigung der Struktur gestattet es, unmittelbar nach der Bestimmung des Referenzpunkts mit der Fertigung der Struktur, insbesondere der Linse, zu beginnen, ohne die Apparaturen und/oder den optischen Leiter noch einmal verschieben zu müssen. Das erfindungsgemäße Verfahren zur Bestimmung des optischen Zentrums des optischen Lichtwellenleiters ist somit vollständig in das 3D-Druckverfahren integriert und kann dadurch in höchstem Maße automatisiert durchgeführt werden.

Sobald der Referenzpunkt am axialen Ende mittels des beschriebenen Messschritts ermittelt wurde, kann der nachfolgende Schreibschritt unter Referenzieren der Fokussieroptik auf den ermittelten Referenzpunkt durchgeführt werden. Das Referenzieren der Fokussieroptik auf den ermittelten Referenzpunkt kann durch Relativverschiebung der Fokussieroptik zum optischen Leiter in einer zur optischen Achse der Fokussieroptik orthogonalen Ebene erfolgen, wobei zum Beispiel eine Relativposition aufgesucht wird, in welcher die optische Achse der Fokussieroptik auf den Referenzpunkt am axialen Ende des optischen Leiters gerichtet ist. Alternativ kann der Fokuspunkt durch eine entsprechende Ansteuerung einer Ablenkungseinrichtung, wie beispielsweise eines Galvanometerscanners, für den Strahl stromaufwärts der Fokussieroptik auf den Referenzpunkt gerichtet werden.

Im Rahmen der vorliegenden Erfindung ist es bevorzugt, dass als Referenzpunkt ein Messpunkt oder eine Gruppe von nebeneinander liegenden Messpunkten mit höheren Lichtleistungen als die Lichtleistungen der umgebenden Messpunkte bestimmt wird. Für den Fall, dass die Modenverteilung des am anderen Ende des Lichtwellenleiters emittierten Lichts zu einer einer gaußförmigen Intensitätsverteilung ähnlichen Verteilung der gemessenen Lichtleistungen an den Messpunkten führt, kann der Referenzpunkt als Maximum dieser Verteilung ermittelt werden. Es treten aber in der Regel auch komplexere Modenverteilungen auf, die zu anderen Lichtleistungsverteilungen mit einem lokalen Minimum der Lichtleistung im optischen Zentrum führen. In diesem Fall ist es im Rahmen der vorliegenden Erfindung bevorzugt, dass als Referenzpunkt ein Messpunkt oder eine Gruppe von nebeneinander liegenden Messpunkten mit niedrigeren Lichtleistungen als die Lichtleistungen der umgebenden Messpunkte bestimmt wird. Das Auffinden der derart definierten Messpunkte beziehungsweise der derart definierten Gruppe von nebeneinander liegenden Messpunkten kann hierbei auch dadurch erfolgen, dass in einem iterativen Verfahren Messpunkte hinsichtlich ihrer Lichtleistungen ausgewertet werden.

Obwohl, wie oben erwähnt, mit dem erfindungsgemäßen Verfahren nicht grundsätzlich die geometrische Mitte des Lichtwellenleiters und auch nicht die geometrische Mitte des Kerns des Lichtwellenleiters ermittelt werden soll, ist es doch zutreffend, dass die Bestimmung des Referenzpunkts grundsätzlich anhand der Lichtleistungsverteilung an den Messpunkten erfolgt und dass der Refernzpunkt in der Regel zumindest einigermaßen mittig im Querschnitt des Kerns liegt.

Bevorzugt umfasst das Verfahren zumindest die folgenden Schritte:
- Ausrichten der eine z-Richtung eines kartesischen Koordinatensystems definierenden optischen Achse der Fokussieroptik auf das axiale Ende,
- Abrastern des axialen Endes in den sich zur z-Richtung normal erstreckenden x-Richtungen und y-Richtungen des kartesischen Koordinatensystems mittels des auf die Ebene des axialen Endes fokussierten Messstrahls, sodass für jeden Messpunkt ein Messwert der Lichtleistung des beim Abrastern durch den optischen Leiter geleiteten Lichts erhalten wird,
- Anpassen einer Verteilungsfunktion an die Messwerte der Lichtleistung,
- Ermitteln des Referenzpunkts am axialen Ende aus der Verteilungsfunktion,
- generative Fertigung der Struktur unter Referenzieren der Fokussieroptik auf den ermittelten Referenzpunkt am axialen Ende mittels des Schreibstrahls zum Verfestigen des Materials.

Im ersten Schritt des Ausrichtens der optischen Achse der Fokussieroptik auf das axiale Ende des optischen Leiters wird die Optik nur grob auf das axiale Ende gerichtet, sodass im darauffolgenden Schritt des Abrasterns der optische Leiter am axialen Ende zumindest von dem zum Abrastern eingesetzten Licht getroffen wird. Im Falle der Ausbildung des optischen Leiters mit einer kreisrunden Schnittfläche besteht das axiale Ende im Wesentlichen aus einem mehr oder weniger kreisringförmigen Mantel und einem lichtleitenden Kern im Inneren des Mantels. Das Ziel der vorliegenden Erfindung ist es, das optische Zentrum des Kerns als Referenzpunkt möglichst genau zu ermitteln, um in der Folge die Struktur, wie z.B. eine optische Linse, auf das optische Zentrum referenziert zu drucken.

Der Schritt des Abrasterns des axialen Endes in den x-Richtungen und y-Richtungen mit einem fokussierten Messstrahl (Messlichtstrahl) und des Messens der am anderen Ende des Lichtwellenleiters aufgrund der x-,y-Position der jeweiligen Messpunkte jeweils resultierenden Lichtleistungen führt dazu, dass ein Satz aus Messpunkten mit entsprechenden Lichtintensitäts- oder Lichtleistungsmesswerten erhalten wird, wobei die Lichtleistung, die beim Messen an einem bestimmten Messpunkt am andern Ende des Lichtwellenleiters gemessen wird, vor allem davon abhängt, wie genau der Messstrahl das optische Zentrum trifft, das heißt, wie genau der betreffende Messpunkt dem optischen Zentrum des Lichtwellenleiters entspricht. Je präziser der Messstrahl in das optische Zentrum eintritt, desto vollständiger wird das Licht in den Leiter eingekoppelt und desto effektiver und vollständiger erfolgt die Totalreflexion des eingestrahlten Lichts an den Innenwänden des Mantels, sodass entweder eine höhere Lichtleistung am anderen Ende des Lichtwellenleiters oder, bei komplexeren Modenverteilungen, eine im Vergleich zu Messpunkten, die das optische Zentrum umgeben, eine geringere Lichtleistung gemessen wird als im Falle einer Einstrahlung des Messstrahls in einem randständigeren Bereich des Kerns oder gar neben dem Kern im Bereich des Mantels des Leiters. Es wird somit abhängig von der Position der Messpunkte in Bezug auf das optische Zentrum eine Lichtleistungsverteilung erhalten, die es in den folgenden Schritten gestattet, das optische Zentrum als Referenzpunkt zu bestimmen und die Fokussieroptik des 3D-Druckers darauf zu referenzieren.

Hierzu wird eine Verteilungsfunktion an die Messwerte der Lichtleistung angepasst und im nächsten Schritt der Referenzpunkt am axialen Ende aus der Verteilungsfunktion ermittelt.

Grundsätzlich kann der Schritt des Anpassens der Verteilungsfunktion an die an den Messpunkten gemessenen Lichtleistungen direkt aus der Gesamtheit der in den x-Richtungen und y-Richtungen des kartesischen Koordinatensystems als multivariate Verteilung erfolgen. Die vorliegende Erfindung kann jedoch gemäß einer bevorzugten Ausführungsform auch dadurch gekennzeichnet sein, dass Messwerte entlang von Linien in der x-Richtung und entlang von Linie in der y-Richtung jeweils separat aufsummiert werden und dass der Referenzpunkt als Koordinatenpaar mit den beiden Höchstwerten der beim Aufsummieren erhaltenen Summen in der x-Richtung und in der y-Richtung ermittelt wird. Auf diese Weise können die Koordinaten des Referenzpunkts automatisiert ermittelt werden.

Grundsätzlich kann der Schritt des Abrastern auch durch ein iteratives Optimierungsverfahren ersetzt werden, um den Referenzpunkt zu ermitteln.

Wie bereits oben erwähnt, dient der Schritt des Ausrichtens der optischen Achse der Fokussieroptik nur der groben Ausrichtung des Messstrahls auf das axiale Ende und noch nicht dazu, das optische Zentrum des Lichtwellenleiters genau zu bestimmen. Demgemäß erfolgt gemäß einer bevorzugten Ausführungsform der vorliegenden Erfindung der Schritt des Ausrichtens der optischen Achse der Fokussieroptik mit einer durch die Fokussieroptik gerichteten Kamera. Die Kamera liefert ein herkömmliches Bild des axialen Endes und kann dabei im Vergleich zum menschlichen Auge im Zusammenspiel mit der Fokussieroptik eine geeignete Vergrößerung bereitstellen. Die Position des optischen Leiters in Z-Richtung kann durch einen Autofokusroutine auf der Oberfläche der Faser bestimmt werden.

Die Fokussieroptik ist im Bereich der lithographiebasierten generativen Fertigung (3D-Druck) von Bauteilen im um-Bereich (Mikrometer) in aller Regel ein weitgehend herkömmliches Objektiv aus der Mikroskopie und stellt als solches beispielsweise eine Vergrößerung von etwa 5-fach bis etwa 100-fach zur Verfügung. Die Bilder, die durch die Fokussieroptik mit der Kamera aufgenommen werden, können auch durch im Stand der Technik bekannte Verfahren hinsichtlich des Kontrasts oder der Farbgebung verändert werden, um die Ränder des Kerns oder die Außenkontur des Lichtwellenleiters besser darstellen zu können. Es ist auf diese Weise möglich, eine computergestützte Kantenerkennung durchzuführen und die Fokussieroptik anhand der erkannten Ränder automatisch auf das axiale Ende des Lichtwellenleiters auszurichten.

Für die Fertigung von Strukturen im Größenbereich von wenigen Mikrometern (um-Bereich) wird im Rahmen der vorliegenden Erfindung bevorzugt ein Druckverfahren durchgeführt, bei dem das zu verfestigende Material als Tropfen auf dem axialen Ende des optischen Leiters vorliegt und die Struktur, wie z.B. eine optische Linse, in dem Tropfen durch Bewegen des Fokuspunkts des Schreibstrahls in den x-, y- und z-Richtungen aufgebaut wird. Ein solches Verfahren nützt die Absorption mehrerer Photonen zur Anregung eines Moleküls im Fokuspunkt durch das verfestigbare Material, was zu einer spezifischen Verfestigung führt. Ein solches Lithographie-Verfahren wird daher als Multiphotonen-Lithographie bezeichnet. Außerhalb des Fokuspunkts kommt es nicht zur Absorption einer ausreichenden Photonenzahl innerhalb eines reaktiven Zeitraums, sodass keine Verfestigung erfolgt.

Die vorliegende Erfindung ist daher bevorzugt dahingehend weitergebildet, dass das verfestigbare Material vor dem Messschritt das axiale Ende benetzend zwischen die Fokussieroptik und das axiale Ende eingebracht wird. Auf diese Weise ist das verfestigbare Material bereits im Arbeitsfeld, wenn der Referenzpunkt ermittelt wird, sodass unmittelbar nach dem Ermitteln des Referenzpunkts und damit des optischen Zentrums mit dem Druckvorgang begonnen werden kann. Gleichzeitig erfolgt bei dieser bevorzugten Ausführungsform der vorliegenden Erfindung die Bestimmung des Referenzpunkts und die Referenzierung der Fokussieroptik durch dasselbe Medium hindurch, das auch bei der Fertigung der optischen Linse oder bei der Fertigung einer anderen optischen Struktur im Lichtweg der Optik vorliegt, sodass keine unterschiedlichen optischen Phänomene hinsichtlich Apertur, Brechungsindex und dergleichen zwischen der Phase des Referenzierens der Optik und der Phase des Druckens der Struktur zu berücksichtigen sind. Auf diese Weise wird eine hohe Präzision des erfindungsgemäßen Verfahrens erreicht.

In eben diesem Sinne wird eine weitere Verbesserung erreicht, wenn das verfestigbare Material vor dem Messschritt die Fokussieroptik und das axiale Ende benetzend zwischen die Fokussieroptik und das axiale Ende eingebracht wird, wie dies einer bevorzugten Ausführungsform der vorliegenden Erfindung entspricht. Bei dieser bevorzugten Ausführungsform der vorliegenden Erfindung kann darüber hinaus bei Verwendung einer Immersionsoptik als Fokussieroptik eine höhere numerische Apertur der Optik erreicht werden, wie dies auch für die Immersionsmikroskopie gilt. Dies führt zu einer Verbesserung der räumlichen Auflösung und verbessertem Lichtdurchsatz.

Wenn die Fokussieroptik nicht mit dem verfestigbaren Material verunreinigt werden soll, kann alternativ auch so vergangen werden, dass das verfestigbare Material vor dem Messschritt eine zwischen dem axialen Ende und der Fokussieroptik angeordnete, transparente Platte, insbesondere ein Präzisionsdeckglas, und das axiale Ende des optischen Leiters benetzend zwischen die Fokussieroptik und das axiale Ende eingebracht wird. Auf diese Weise wird das verfestigbare Material zwischen dem axialen Ende des optischen Leiters und der transparenten Platte festgehalten und die Belichtung des Materials erfolgt durch die transparente Platte hindurch. Die Fokussieroptik bleibt dabei sauber. Insbesondere eignet sich diese bevorzugte Ausführungsform in Kombination mit Fokussieroptiken mit Deckglaskorrektur und einem 170±5 µm dicken Präzisionsdeckglas.

Der Messstrahl unterschiedet sich hierbei von dem zum Verfestigen des Materials eingesetzten Schreibstrahl hinsichtlich seiner Lichtleistung und ist entsprechend weniger intensiv, sodass der Messstrahl beim Messschritt keine Verfestigung mittels Multiphotonenabsorption verursacht.

Das vorliegende Verfahren betrifft bevorzugt ein lithographiebasiertes generatives Fertigungsverfahren basierend auf Multiphotonenabsorption, bei dem eine Verfestigung des Materials grundsätzlich nur dann erfolgt, wenn ein ausreichend starke Lichtdosis in einen Fokuspunkt des Materials einwirkt. Dennoch kann es bei zu langer Bestrahlungsdauer zu unspezifischen Polymerisationsreaktionen der Monomere im verfestigbaren Material kommen, sodass es vorteilhaft erscheint, die vor der geplanten Verfestigung des Materials eingestrahlte elektromagnetische Energie zu begrenzen. Aus diesem Grund ist es gemäß einer bevorzugten Ausführungsform der vorliegenden Erfindung vorgesehen, dass der Messstrahl höchstens die Hälfte, bevorzugt höchstens ein Drittel, weiter bevorzugt höchstens ein Fünftel und insbesondere bevorzugt höchstens ein Zehntel der Strahlungsenergie des Schreibstrahls aufweist. Die Strahlungsenergie wird hierbei üblicherweise mit einem optischen Leistungsmesser (z.B. von Thorlabs) gemessen.

In bevorzugter Weise ist es im Rahmen der vorliegenden Erfindung vorgesehen, dass sowohl der Messstrahl als auch der Schreibstrahl von der Bestrahlungseinrichtung erzeugt werden. Dies führt dazu, dass der apparative Aufwand zur Durchführung des ordnungsgemäßen Verfahrens gering bleibt und es ist sichergestellt, dass es zu keiner Verschiebung der Apparaturen nach der Referenzierung der Fokussieroptik auf den Referenzpunkt des Kerns des optischen Leiters kommt.

Neben der Bestimmung der x-Koordinaten und y-Koordinaten des Referenzpunkts am axialen Ende des optischen Leiters, ist es für die Qualität der mit den erfindungsgemäßen Verfahren gefertigten Struktur auch wesentlich, den Grad der Verkippung des zur Fokussieroptik gerichteten Endbereichs des optischen Leiters, auf dem die Struktur, wie z.B. eine optische Linse, ein Beugungsgitter, eine Blende oder dergleichen, gefertigt werden soll, in Bezug auf die optische Achse der Fokussieroptik beziehungsweise auf die Verfahrrichtung der Fokussieroptik zu bestimmen. Wird bei einem verkippten optischen Leiter lediglich der Referenzpunkt und damit das optische Zentrum des Lichtwellenleiters mit dem erfindungsgemäßen Verfahren ermittelt und die Struktur in der Folge ohne Berücksichtigung der Verkippung gefertigt, wird unter Umständen eine Struktur, wie z.B. eine optische Linse, gedruckt, deren optische Achse schräg auf die Eintrittsachse oder Austrittsachse des optischen Leiters steht. Dies beeinflusst selbstverständlich die Qualität der Einkopplung oder Auskopplung von Licht in den beziehungsweise aus dem optischen Leiter. Es ist daher wünschenswert, neben den Koordinaten in der x-Richtung und der y-Richtung auch den Grad der Verkippung im Rahmen der vorliegenden Erfindung zu bestimmen.

Zur Bestimmung des Grads der Verkippung ist das erfindungsgemäße Verfahren bevorzugt dahingehend weitergebildet, dass der Messschritt zur Ermittlung des optischen Zentrums unter Variation des Abstands der Fokussieroptik vom axialen Ende in der z-Richtung mehrmals wiederholt wird, sodass eine Mehrzahl von Punkten des optischen Zentrums in unterschiedlichen Positionen erhalten wird, und eine örtliche Differenz eine Verkipprichtung definiert, in die der optische Leiter in Bezug auf die optische Achse der Fokussieroptik beziehungsweise auf die Verfahrrichtung der Fokussieroptik verkippt ist. Die bisher beschriebene Vermessung der Lichtleistung in den Messpunkten in der x-,y-Ebene erfolgt gemäß dieser bevorzugten Ausführungsform der vorliegenden Erfindung somit in mehreren, in z-Richtung verschiedenen x-,y-Ebenen. Hierbei kann eine Richtung bestimmt werden, in der die jeweilige Verteilung in den jeweiligen Variationen in der z-Richtung verschoben sind, sodass die Verkippung des Lichtwellenleiters bestimmt werden kann.

Gemäß einer bevorzugten Ausführungsform der vorliegenden Erfindung erfolgt der Schreibschritt unter Berücksichtigung der Verkipprichtung. Dies kann bedeuten, dass entweder der optische Leiter oder die Fokussieroptik hinsichtlich der Verkippung nachkorrigiert wird, um z.B. eine fluchtende Ausrichtung der optischen Achse der Fokussieroptik mit der optischen Achse des axialen Endes des optischen Leiters zu erreichen. Alternativ kann die Verkippung auch dergestalt berücksichtigt werden, dass das 3D-Schichtmodell der zu druckenden Struktur entsprechend angepasst (z.B. in Bezug auf ein Referenzkoordinatensystem verdreht) und die Struktur in der Folge unter Festhalten der ermittelten Position und Ausrichtung des optischen Leiters gefertigt wird.

Eine weitere Verbesserung der optischen Leistung der mit dem erfindungsgemäßen Verfahren hergestellten Struktur auf dem axialen Ende des optischen Leiters kann gemäß einer bevorzugten Ausführungsform der vorliegenden Erfindung dadurch erfolgen, dass der Schreibschritt zweistufig erfolgt, wobei in einer zweiten Fertigungsstufe ein vom in einer ersten Fertigungsstufe eingesetzten verfestigbaren Material verschiedenes verfestigbares Material eingesetzt wird. In der zweiten Fertigungsstufe kann gemäß diesem bevorzugten Vorgehen beispielsweise ein besonders kratzfestes Material oder ein Material mit einem besonders geringen Brechungsindex oder mit geringer Reflexion zum Einsatz gelangen.

Gemäß einem zweiten Aspekt der vorliegenden Erfindung wird eine Vorrichtung zur lithographiebasierten generativen Fertigung einer Struktur, insbesondere einer optischen Linse, an einem axialen Ende eines optischen Leiters, bereitgestellt, umfassend eine Bestrahlungseinrichtung zum Aussenden elektromagnetischer Strahlung, eine Halteeinrichtung zum Halten des optischen Leiters und eine Fokussieroptik zum Fokussieren eines von der Bestrahlungseinrichtung erzeugte Schreibstrahls in ein, bevorzugt mittels Multiphotonenabsorption, verfestigbares Material, wobei der Schreibstrahl in einem Schreibschritt nacheinander auf Fokuspunkte innerhalb des verfestigbaren Materials fokussierbar ist, wodurch jeweils ein am Fokuspunkt befindliches Volumenelement des Materials verfestigbar ist, wobei erfindungsgemäß weiters eine Messeinrichtung zur Messung einer Lichtleistung von durch den optischen Leiter geleitetem Licht vorgesehen ist, sodass in einem dem Schreibschritt vorgelagerten Messschritt ein von der Fokussieroptik auf die Ebene des axialen Endes fokussierbarer und auf eine finite Anzahl von über das axiale Ende verteilten Messpunkten richtbarer Messstrahl nach dem Hindurchtreten durch den optischen Leiter für jeden Messpunkt einen Messwert erzeugt, und wobei die Messeinrichtung mit einer Auswerteeinrichtung verbunden ist, der die Messwerte zugeführt sind und die ausgebildet ist, um einen Referenzpunkt am axialen Ende des optischen Leiters anhand der an den Messpunkten gemessenen Lichtleistungen zu bestimmend.

Weiterbildungen der erfindungsgemäßen Vorrichtung betreffen Ausführung von bevorzugten Ausbildungen des oben beschriebenen Verfahrens, wobei hinsichtlich der jeweiligen technischen Effekte auf die obige Beschreibung des erfindungsgemäßen Verfahrens verwiesen wird.

Bevorzugt umfasst die Vorrichtung weiters eine Steuereinrichtung, welche die Bestrahlungseinrichtung und die Fokussieroptik steuert und die eingerichtet ist, das axiale Ende in den sich zur optischen Achse der Fokussieroptik (z-Richtung) normal erstreckenden x-Richtungen und y-Richtungen eines kartesischen Koordinatensystems mittels des durch die Fokussieroptik auf die Ebene des axialen Endes fokussierten Messstrahls abzurastern, sodass für jeden Messpunkt ein Messwert der Lichtleistung des beim Abrastern durch den optischen Leiter geleiteten Lichts erhalten wird, und die Auswerteeinrichtung eingerichtet ist, eine Verteilungsfunktion an die Messwerte der Lichtleistung anzupassen und den Referenzpunkt am axialen Ende zu erfassen, worauf die Steuereinrichtung die generative Fertigung der Struktur unter Referenzieren der Fokussieroptik auf den ermittelten Referenzpunkt am axialen Ende mittels des Schreibstrahls zum Verfestigen des Materials vornimmt.

Bevorzugt ist vorgesehen, dass die Auswerteeinheit eingerichtet ist, um Messwerte entlang von Linien in der x-Richtung und entlang von Linie in der y-Richtung jeweils separat aufzusummieren und den Referenzpunkt als Koordinatenpaar mit den beiden Höchstwerten der beim Aufsummieren erhaltenen Summen in der x-Richtung und in der y-Richtung zu ermitteln.

Bevorzugt weist der Messstrahl höchstens die Hälfte, bevorzugt ein Drittel , weiter bevorzugt höchstens ein Fünftel und insbesondere bevorzugt höchstens ein Zehntel der Strahlungsenergie des Schreibstrahls auf.

Bevorzugt ist die Bestrahlungseinrichtung eingerichtet, um sowohl den Messstrahl als auch den Schreibstrahl zu erzeugen.

Bevorzugt ist die Steuereinrichtung eingerichtet, den Messschritt zur Ermittlung des Referenzpunkte unter Variation des Abstands der Fokussieroptik vom axialen Ende in der z-Richtung mehrmals zu wiederholen, sodass eine Mehrzahl von Referenzpunkten erhalten wird, und die Auswerteeinrichtung eingerichtet ist, um aus einer örtlichen Differenz der Referenzpunkte eine Verkipprichtung zu ermitteln, in die der optische Leiter in Bezug auf die optische Achse der Fokussieroptik beziehungsweise auf die Verfahrrichtung der Fokussieroptik verkippt ist.

Bevorzugt ist die Steuereinrichtung eingerichtet, um den Schreibschritt unter Berücksichtigung der Verkipprichtung zu steuern.

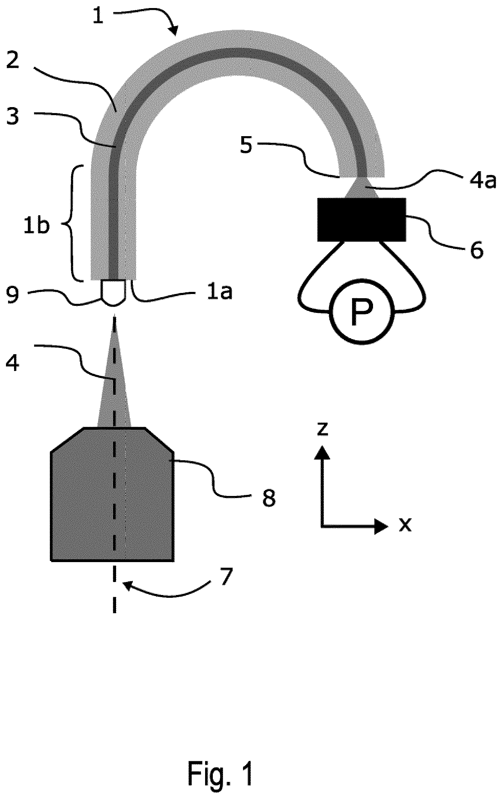

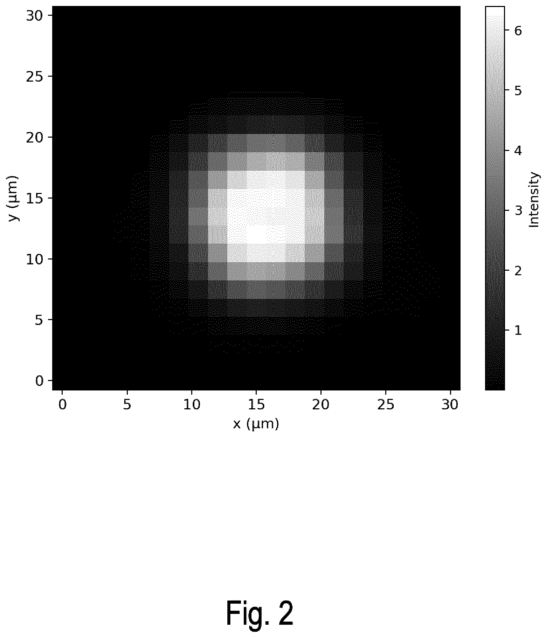

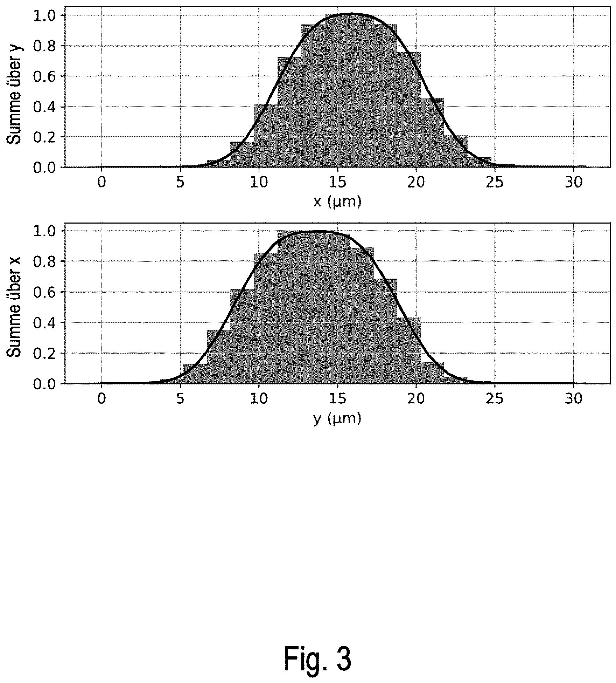

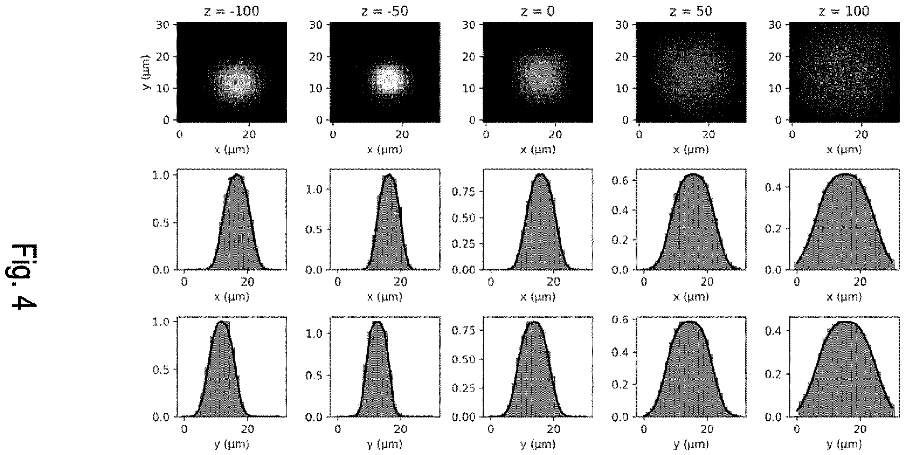

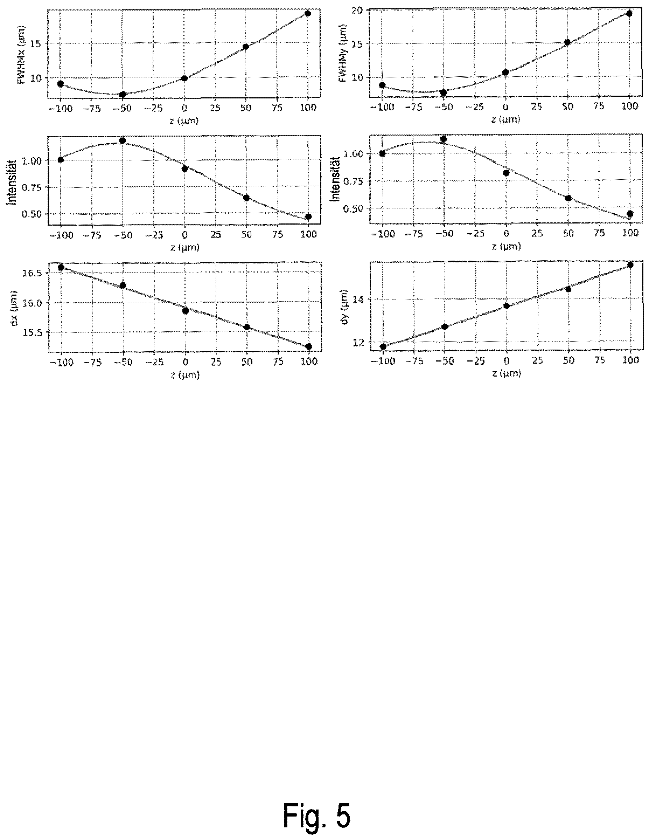

Die Erfindung wird nachfolgend anhand eines in der Zeichnung dargestellten Ausführungsbeispiels näher erläutert. In dieser zeigen Figur 1 eine vereinfachte Darstellung des apparativen Aufbaus zur Durchführung des erfindungsgemäßen Verfahrens, Figur 2 das Ergebnis des Schritts des Abrasterns und Messens in einer graphischen Darstellung, Figur 3 das Ergebnis des Schrittes des Anpassens einer Verteilungsfunktion an eine Summenfunktion der in x-Richtung und in y-Richtung jeweils an den Messpunkten gemessenen Lichtleistungen , Figur 4 Ergebnisse des Schrittes des Abrasterns und Messens unter Variation des Abstandes der Fokussieroptik vom axialen Ende in der z-Richtung und Figur 5 die diagrammatische Auswertung der Daten aus Figur 4 zur Ermittlung der Verkipprichtung, in die der optische Leiter in Bezug auf die optische Achse der Fokussieroptik beziehungsweise auf die Verfahrrichtung der Fokussieroptik verkippt ist.

In Figur 1 ist ein optischer Leiter beziehungsweise Lichtwellenleiter im Längsschnitt dargestellt und mit dem Bezugszeichen 1 bezeichnet. Der optische Leiter 1 besteht im Wesentlichen aus einem Mantel 2 mit im Wesentlichen kreisringförmigem Querschnitt und einem darin befindlichen Kern 3. Licht, dargestellt durch den Messstrahl (beziehungsweise Messlichtstrahl) 4, welches in den Kern 3 eintritt, wird aufgrund des Brechnungsindexunterschieds zwischen Kern 3 und Mantel 2 totalreflektiert und dadurch zu einem Ende 5 des Leiters 1 geleitet, wo der durch den Leiter 1 geleitete Lichtstrahl 4a auf einen Photosensor 6 trifft. Der Photosensor 6 misst in herkömmlicher Weise die Lichtleistung. Der Lichtstrahl 4 tritt im Wesentlichen entlang der optischen Achse 7 der Fokussieroptik 8 aus, die eine z-Richtung eines dreidimensionalen, kartesischen Koordinatensystems definiert. Der Messstrahl 4 kann geringfügig aus der optischen Achse 7 ausgelenkt sein, um das axiale Ende 1a des Leiters 1 abzurastern. Der Leiter 1 weist einen Eintrittsbereich 1b auf, der dadurch definiert ist, dass ein Lichtstrahl, der erst jenseits dieses Bereichs erstmals reflektiert wird, hinsichtlich der am Ende 5 des Leiters 1 zu messenden Lichtleistung nicht von einem vollständig parallel in den Leiter 1 eintretenden Lichtstrahl zu unterscheiden ist. Die auf das axiale Ende 1a des Leiters 1 zu druckende Struktur, in diesem Fall eine optische Linse, ist in Figur 1 mit dem Bezugszeichen 9 bezeichnet.

Abrastern einer Vielzahl von Messpunkten am axialen Ende 1a des Leiters 1 führt zu einer wie in Figur 2 dargestellten Intensitäts- oder Lichtleistungsverteilung des Lichtstrahls 4a auf dem Photosensor 6 abhängig von der x-,y-Position des Messpunkts am axialen Ende 1a des Leiters 1. Es ist zu erkennen, dass für jeden der Messpunkte ein Messwert der Lichtleistung des am Ende 5 austretenden Strahls 4a erhalten wurde, wobei sich die Messwerte schachbrettartig entsprechend der in x-Richtung und in y-Richtung angeordneten Messpunkte aneinanderreihen. Je nach der Position der Einstrahlung ergibt sich eine andere Lichtleistung, die vom Photosensor 6 gemessen wird. Dabei geht, wie in Figur 2 zu erkennen ist, eine mehr oder weniger zentrische Einstrahlung des Messstrahls 4 in den Kern 3 nicht zwingend mit einer maximalen Lichtleistung einher. Dies ist darauf zurückzuführen, dass Licht einer gewissen Wellenlänge im Lichtwellenleiter eine unterschiedliche Anzahl an geführten Moden aufweist, was zu von einer gaußförmigen Intensitätsverteilung abweichenden Verteilungen der Lichtleistung führen kann.

Das Aufsummieren der in der x-Richtung und in der y-Richtung gemessenen Lichtleistungen und Anpassen einer Verteilung an diese Summenfunktion liefert die in Figur 3 dargestellten Verteilungen, aus denen die Position des Referenzpunkts am axialen Ende des Leiters 1 in der x-Richtung und in der y-Richtung abzulesen ist. Der Referenzpunkt fällt im Wesentlichen mit dem optischen Zentrum des Lichtwellenleiters 1 zusammen. Es wird somit ein Koordinatenpaar x und y erhalten, auf das die Fokussieroptik 8 zur generativen Fertigung der optischen Linse oder einer anderen optischen Struktur am axialen Ende 1a referenziert werden kann.

In Figur 4 sind Lichtleistungsverteilungen und deren angepasste Verteilungen in der x-Richtung und in der y-Richtung dargestellt. Es ist erkennbar, dass bei Variation in der z-Richtung zwischen einem z-Abstand von -100µm und +100µm in Bezug auf z=0, wobei z=0 die Startposition angibt, unterschiedliche Verteilungen der Lichtleistung gemessen und als Verteilungen dargestellt werden können. Dies beruht im in Figur 4 dargestellten Fall darauf, dass der Eintrittsbereich 1b des Leiters 1 in Bezug auf die optische Achse 7 der Fokussieroptik 8 beziehungsweise auf die Verfahrrichtung der Fokussieroptik 8 verkippt ist, sodass die in den jeweiligen Ebenen ermittelten Referenzpunkte zueinander verschoben sind, wodurch sich das am Ende resultierende Rasterbild je nach Entfernung in der z-Richtung unterschiedlich darstellt.

In Figur 5 sind die Verteilungen hinsichtlich ihrer Weite (Zeile 1), ihrer Maximalwerte der Lichtleistungsverteilung Zeile 2) und der Position der jeweiligen Mittelpunkte der Lichtleistung (Zeile 3) in Diagramme eingetragen, wobei die Diagramme in der linken Spalte für die entsprechenden Werte in den x-Richtungen und jene in der rechten Spalte für die Werte in den y-Richtungen stehen. Es ist erkennbar, dass im vorliegenden Fall die Breite sowohl in der x-Richtung als auch in der y-Richtung nach einer Verringerung im Bereich von - 100µm bis -50µm (in Bezug auf z=0) abnimmt und danach bis z=+100um wieder zunimmt (Zeile 1). Auch die Lichtleistung nimmt sowohl in der x-Richtung als auch in der y-Richtung im genannten ersten Bereich erst zu, um danach wieder abzunehmen (Zeile 2). Aus dem axialen Verlauf der Weite und Leistungsverteilung lässt sich die Position des axialen Endes 1a des Leiters bestimmen. Alternativ kann eine separate Autofokusroutine dafür verwendet werden. Die Position des Mittelpunks der Lichtleistung in der x-Richtung (Zeile 3, links) wandert mit zunehmendem Abstand (-100µm ≤ z **≤** +100µm) jedoch stetig von ungefähr 16,7um zu ungefähr 15,25um. Die Position des Mittelpunks der Lichtleistung in der y-Richtung (Zeile 3, rechts) wandert mit zunehmendem Abstand (-100um **≤** z **≤** +100µm) gleichfalls stetig von ungefähr 11,9um zu ungefähr 16µm. Aus den Wertepaaren (x,y) von z=-100µm und z=+100um lässt sich ein Vektor bilden, der die Richtung der Verkippung des Eintrittsbereichs 1b des Leiters 1a in Bezug auf die optische Achse 7 darstellt. Die Linearität der gemessenen Werte ist in Zeile 3 deutlich zu erkennen, sodass in augenfälliger Weise tatsächlich eine eindeutige Richtung der Verkippung mit dem erfindungsgemäßen Verfahren gemessen werden kann. Die optische Linse 9 kann in der Folge an die Verkippung angepasst gedruckt werden, um eine symmetrisch auf dem axialen Ende 1a des Leiters 1 angeordnete Linse 9 zu erhalten.

## Patentansprüche

1. Verfahren zur lithographiebasierten generativen Fertigung einer Struktur, insbesondere einer optischen Linse, an einem axialen Ende eines optischen Leiters, bei dem in einem Schreibschritt von einer Bestrahlungseinrichtung ausgesendete elektromagnetische Strahlung mittels einer der Bestrahlungseinrichtung nachgeordneten Fokussieroptik zu einem Schreibstrahl fokussiert wird, der nacheinander auf Fokuspunkte innerhalb eines, bevorzugt mittels Multiphotonenabsorption, verfestigbaren Materials gerichtet wird, wodurch jeweils ein am Fokuspunkt befindliches Volumenelement des Materials verfestigt wird, **dadurch gekennzeichnet, dass** in einem dem Schreibschritt vorgelagerten Messschritt elektromagnetische Strahlung, die vorzugsweise von der Bestrahlungseinrichtung ausgesendet wird, von der Fokussieroptik zu einem auf die Ebene des axialen Endes fokussierten Messstrahl fokussiert und auf eine finite Anzahl von über das axiale Ende verteilten Messpunkten gerichtet wird, wobei jeweils die Lichtleistung des hierbei an den jeweiligen Messpunkten durch den optischen Leiter geleiteten Lichts gemessen wird und ein Referenzpunkt am axialen Ende des optischen Leiters für die generative Fertigung der Struktur anhand der an den Messpunkten gemessenen Lichtleistungen bestimmt wird.

2. Verfahren nach Anspruch 1, **dadurch gekennzeichnet, dass** als Referenzpunkt ein Messpunkt oder eine Gruppe von nebeneinander liegenden Messpunkten mit höheren Lichtleistungen als die Lichtleistungen der umgebenden Messpunkte oder dass als Referenzpunkt ein Messpunkt oder eine Gruppe von nebeneinander liegenden Messpunkten mit niedrigeren Lichtleistungen als die Lichtleistungen der umgebenden Messpunkte bestimmt wird.

3. Verfahren nach Anspruch 1 oder 2, das Verfahren zumindest umfassend die folgenden Schritte:
- Ausrichten der eine z-Richtung eines kartesischen Koordinatensystems definierenden optischen Achse der Fokussieroptik auf das axiale Ende,
- Abrastern des axialen Endes in den sich zur z-Richtung normal erstreckenden x-Richtungen und y-Richtungen des kartesischen Koordinatensystems mittels des auf die Ebene des axialen Endes fokussierten Messstrahls, sodass für jeden Messpunkt ein Messwert der Lichtleistung des beim Abrastern durch den optischen Leiter geleiteten Lichts erhalten wird,
- Anpassen einer Verteilungsfunktion an die Messwerte der Lichtleistung,
- Ermitteln des Referenzpunkts am axialen Ende aus der Verteilungsfunktion,
- generative Fertigung der Struktur unter Referenzieren der Fokussieroptik auf den ermittelten Referenzpunkt am axialen Ende mittels des Schreibstrahls zum Verfestigen des Materials.

4. Verfahren nach Anspruch 3, **dadurch gekennzeichnet, dass** Messwerte entlang von Linien in der x-Richtung und entlang von Linie in der y-Richtung jeweils separat aufsummiert werden und dass der Referenzpunkt als Koordinatenpaar mit den beiden Höchstwerten der beim Aufsummieren erhaltenen Summen in der x-Richtung und in der y-Richtung ermittelt wird.

5. Verfahren nach Anspruch 3 oder 4, **dadurch gekennzeichnet, dass** der Schritt des Ausrichtens der optischen Achse der Fokussieroptik mit einer durch die Fokussieroptik gerichteten Kamera erfolgt.

6. Verfahren nach einem der Ansprüche 1 bis 5, **dadurch gekennzeichnet, dass** das verfestigbare Material vor dem Messschritt das axiale Ende benetzend zwischen die Fokussieroptik und das axiale Ende eingebracht wird.

7. Verfahren nach einem der Ansprüche 1 bis 6, **dadurch gekennzeichnet, dass** das verfestigbare Material vor dem Messschritt die Fokussieroptik und das axiale Ende benetzend zwischen die Fokussieroptik und das axiale Ende eingebracht wird.

8. Verfahren nach einem der Ansprüche 1 bis 6, **dadurch gekennzeichnet, dass** das verfestigbare Material vor dem Messschritt eine zwischen dem axialen Ende und der Fokussieroptik angeordnete, transparente Platte, insbesondere ein Präzisionsdeckglas, und das axiale Ende benetzend zwischen die Fokussieroptik und das axiale Ende eingebracht wird.

9. Verfahren nach einem der Ansprüche 1 bis 8, **dadurch gekennzeichnet, dass** der Messstrahl höchstens die Hälfte, bevorzugt höchsten ein Drittel, weiter bevorzugt höchstens ein Fünftel und insbesondere bevorzugt höchstens ein Zehntel der Strahlungsenergie des Schreibstrahls aufweist.

10. Verfahren nach einem der Ansprüche 1 bis 9, **dadurch gekennzeichnet, dass** sowohl der Messstrahl als auch der Schreibstrahl von der Bestrahlungseinrichtung erzeugt werden.

11. Verfahren nach einem der Ansprüche 1 bis 10, **dadurch gekennzeichnet, dass** der Messschritt zur Ermittlung des Referenzpunktes unter Variation des Abstands der Fokussieroptik vom axialen Ende in der z-Richtung mehrmals wiederholt wird, und eine örtliche Differenz zwischen den Referenzpunkten eine Verkipprichtung definiert, in die der optische Leiter in Bezug auf die optische Achse der Fokussieroptik beziehungsweise auf die Verfahrrichtung der Fokussieroptik verkippt ist.

12. Verfahren nach Anspruch 11, **dadurch gekennzeichnet, dass** der Schreibschritt unter Berücksichtigung der Verkipprichtung erfolgt.

13. Verfahren nach einem der Ansprüche 1 bis 12, **dadurch gekennzeichnet, dass** der Schreibschritt zweistufig erfolgt, wobei in einer zweiten Fertigungsstufe ein vom in einer ersten Fertigungsstufe eingesetzten verfestigbaren Material verschiedenes verfestigbares Material eingesetzt wird.

14. Vorrichtung zur lithographiebasierten generativen Fertigung einer Struktur, insbesondere einer optischen Linse, an einem axialen Ende eines optischen Leiters, insbesondere zur Durchführung des Verfahrens nach einem der Ansprüche 1 bis 13, die Vorrichtung umfassend eine Bestrahlungseinrichtung zum Aussenden elektromagnetischer Strahlung, eine Halteeinrichtung zum Halten des optischen Leiters und eine Fokussieroptik zum Fokussieren eines von der Bestrahlungseinrichtung erzeugten Schreibstrahls in ein, bevorzugt mittels Multiphotonenabsorption, verfestigbares Material, wobei der Schreibstrahl in einem Schreibschritt nacheinander auf Fokuspunkte innerhalb des verfestigbaren Materials fokussierbar ist, wodurch jeweils ein am Fokuspunkt befindliches Volumenelement des Materials verfestigbar ist, **dadurch gekennzeichnet, dass** weiters eine Messeinrichtung zur Messung einer Lichtleistung von durch den optischen Leiter geleitetem Licht vorgesehen ist, sodass in einem dem Schreibschritt vorgelagerten Messschritt ein von der Fokussieroptik auf die Ebene des axialen Endes fokussierbarer und auf eine finite Anzahl von über das axiale Ende verteilten Messpunkten richtbarer Messstrahl nach dem Hindurchtreten durch den optischen Leiter für jeden Messpunkt einen Messwert erzeugt, und dass die Messeinrichtung mit einer Auswerteeinrichtung verbunden ist, der die Messwerte zugeführt sind und die ausgebildet ist, um einen Referenzpunkt am axialen Ende des optischen Leiters anhand der an den Messpunkten gemessenen Lichtleistungen zu bestimmen.

15. Vorrichtung nach Anspruch 14, weiters umfassend eine Steuereinrichtung, welche die Bestrahlungseinrichtung und die Fokussieroptik steuert und die eingerichtet ist, das axiale Ende in den sich zur optischen Achse der Fokussieroptik (z-Richtung) normal erstreckenden x-Richtungen und y-Richtungen eines kartesischen Koordinatensystems mittels des durch die Fokussieroptik auf die Ebene des axialen Endes fokussierten Messstrahls abzurastern, sodass für jeden Messpunkt ein Messwert der Lichtleistung des beim Abrastern durch den optischen Leiter geleiteten Lichts erhalten wird, und die Auswerteeinrichtung eingerichtet ist, eine Verteilungsfunktion an die Messwerte der Lichtleistung anzupassen und den Referenzpunkt am axialen Ende zu erfassen, worauf die Steuereinrichtung die generative Fertigung der Struktur unter Referenzieren der Fokussieroptik auf den ermittelten Referenzpunkt am axialen Ende mittels des Schreibstrahls zum Verfestigen des Materials vornimmt.

16. Vorrichtung nach Anspruch 15, **dadurch gekennzeichnet, dass** die Auswerteeinheit ausgebildet ist, um Messwerte entlang von Linien in der x-Richtung und entlang von Linie in der y-Richtung jeweils separat aufzusummieren und den Referenzpunkt als Koordinatenpaar mit den beiden Höchstwerten der beim Aufsummieren erhaltenen Summen in der x-Richtung und in der y-Richtung zu ermitteln.

17. Vorrichtung nach einem der Ansprüche 14 bis 16, **dadurch gekennzeichnet, dass** der Messstrahl höchstens die Hälfte, bevorzugt ein Drittel, weiter bevorzugt höchstens ein Fünftel und insbesondere bevorzugt höchstens ein Zehntel der Strahlungsenergie des Schreibstrahls aufweist.

18. Vorrichtung nach einem der Ansprüche 14 bis 17, **dadurch gekennzeichnet, dass** sowohl der Messstrahl als auch der Schreibstrahl von der Bestrahlungseinrichtung erzeugt werden.

19. Vorrichtung nach einem der Ansprüche 14 bis 18, **dadurch gekennzeichnet, dass** die Steuereinrichtung eingerichtet ist, den Messschritt zur Ermittlung des Referenzpunkts unter Variation des Abstands der Fokussieroptik vom axialen Ende in der z-Richtung mehrmals zu wiederholen, sodass eine Mehrzahl von Referenzpunkten erhalten wird, und die Auswerteeinrichtung eingerichtet ist, um aus einer örtlichen Differenz zwischen den Referenzpunkten eine Verkipprichtung zu ermitteln, in die der optische Leiter in Bezug auf die optische Achse der Fokussieroptik beziehungsweise auf die Verfahrrichtung der Fokussieroptik verkippt ist.

20. Vorrichtung nach Anspruch 19, **dadurch gekennzeichnet, dass** die Steuereinrichtung eingerichtet ist, um den Schreibschritt unter Berücksichtigung der Verkipprichtung zu steuern.
